# EUROPEAN PATENT APPLICATION

(11) **EP 4 729 274 A1**
(43) Date of publication of application: **22.04.2026**
(21) Application number: 24825608.3
(22) Date of filing: 15.05.2024
(51) Int. Cl.: B29C 45/78, B22D 17/20, B29C 45/62, F16B 37/12, G01K 1/14

(54) **MOUNTING STRUCTURE FOR THERMOCOUPLE, MECHANICAL DEVICE PROVIDED WITH SAME, AND METHOD FOR INSTALLING MOUNTING STRUCTURE FOR THERMOCOUPLE**

(30) Priority: 19.06.2023 JP 2023100002
(71) Applicant: The Japan Steel Works, Ltd., Tokyo 141-0032 (JP)
(72) Inventor: YAMAGUCHI, Takeshi, Tokyo 141-0032 (JP)
(74) Representative: Simmons & Simmons LLP (Munich)
(86) International application number: PCT/JP2024/017955
(87) International publication number: WO 2024/262199

(57) **Abstract**

This mounting structure 5 for a thermocouple is attached to a cylinder 32 for heating and melting a material. The mounting structure 5 for a thermocouple has: an intermediate mounting member 52 which has, on the outer surface thereof, an outer screw groove 52A that is engageable with a screw hole 38, which is provided in the cylinder 32, while having an inner screw groove 52B on the inner surface; and a thermocouple holder 51 which is screwed to the inner screw groove 52B of the intermediate mounting member 52, and holds a thermocouple 4. The intermediate mounting member 52 is formed of a material that is different from the material of the thermocouple holder 51.

## Description

### Technical Field

This invention relates to a thermocouple mounting structure, mechanical equipment provided with same, and a method for installing the thermocouple mounting structure.

### Background Art

An injection molding machine comprises a cylinder for heating and melting materials to be injected. To monitor the temperature of the cylinder, a thermocouple is attached to the cylinder. Patent Document 1 describes a thermocouple mounting structure. The cylinder includes threaded holes, and a hollow thermocouple retainer is screwed into the threaded holes. The thermocouple is inserted into the hollow part of the thermocouple retainer.

### Prior Art Documents:

### Patent Documents

Patent Document 1: Japanese Patent Application Laid-Open No. 2002-333372

### Summary of Invention

### Problem to be Solved by Invention

The thermocouple retainer may be removed from the cylinder for such reasons as maintenance of the cylinder. Because the thermocouple retainer is secured by being screwed into the cylinder, it can usually be easily removed from the cylinder. However, if the cylinder is exposed to high temperature for a long period of time, the male threads of the thermocouple retainer may seize and prevent removal of the thermocouple retainer. In such cases, treatments such as forcibly removing the thermocouple retainer by machining become necessary.

The purpose of the present invention is to provide a thermocouple mounting structure that enables more reliable removal of the thermocouple retainer from the cylinder.

### Means for Solving Problem

The thermocouple mounting structure comprises an intermediate mounting member having external threads on its outer surface that engage with a threaded hole provided in a cylinder and internal threads on its inner surface, and a thermocouple retainer that is screwed into the internal threads of the intermediate mounting member to hold the thermocouple. The intermediate mounting member is made of a different material from the thermocouple retainer.

### Effect of Invention

The present invention provides a thermocouple mounting structure that enables more reliable removal of the thermocouple retainer from the cylinder.

### Brief Description of Drawings

[Fig. 1] Fig. 1 is a front view of an injection molding machine according to an embodiment of the present invention.
[Fig. 2] Fig. 2 is an enlarged view of area A in Fig. 1 showing the thermocouple and the thermocouple mounting structure.
[Fig. 3] Fig. 3 is a cross-sectional view of the intermediate mounting member.
[Fig. 4] Fig. 4 is a perspective view of the intermediate mounting member.
[Fig. 5] Fig. 5 is a diagram showing a modification of the thermocouple mounting structure.
[Fig. 6] Fig. 6 is a diagram showing the thermocouple mounting structure of Modification 1.
[Fig. 7] Fig. 7 is a cross-sectional view of the intermediate mounting member of Modification 2.

### Detailed Description of Embodiments

### Overall Configuration of Injection Molding Machine

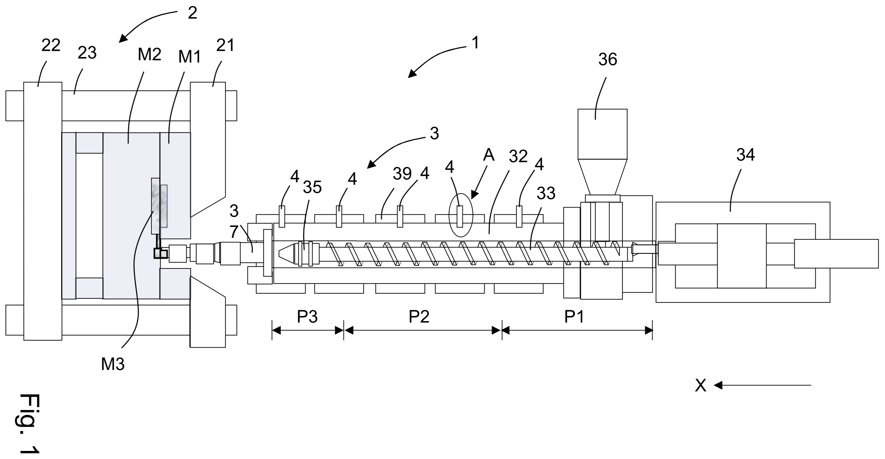

Fig. 1 shows a schematic front view of injection molding machine 1 according to a first embodiment. Injection molding machine 1 is a horizontal metal injection molding machine that injects molten metals such as magnesium and aluminum. Injection molding machine 1 generally comprises mold-clamping unit 2 that clamps a mold, and injection unit 3 that heats, melts, and injects the metal material to be injected. The metal material that is heated and melted for injection is sometimes referred to as molten metal. In the following description, the X-direction refers to the axial direction of cylinder 32. Terms such as "forward" and "rearward" are defined with reference to the direction of injection.

### Mold-Clamping Unit 2

Mold-clamping unit 2 comprises fixed platen 21 that is fixed to a bed (not shown) and to which fixed mold M1 is attached, and movable platen 22 that can slide on the bed and to which movable mold M2 is attached. A mold-clamping housing (not shown) that can slide on the bed is provided on the opposite side of movable platen 22 from fixed platen 21, and fixed platen 21 and the mold-clamping housing are connected by a plurality of tie bars 23. A link mechanism (not shown) is provided between movable platen 22 and the mold-clamping housing for opening and closing the mold. The link mechanism is driven by an electric ball screw. Instead of the link mechanism, a hydraulic mold-clamping cylinder may be provided. Cavity M3 into which the molten metal is injected is formed between fixed mold M1 and movable mold M2.

### Injection Unit 3

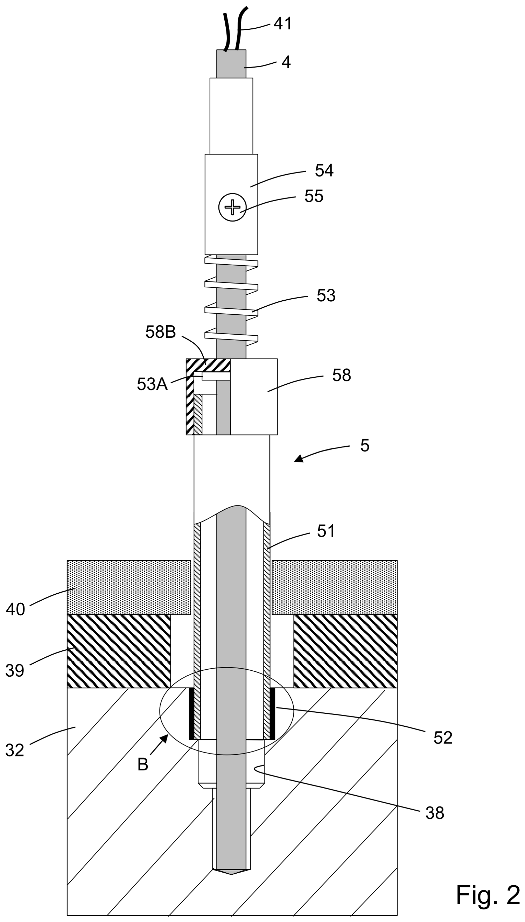

Injection unit 3 is provided on a base (not shown). Injection unit 3 comprises hollow cylinder 32 for heating and melting the metal material to be injected, screw 33 that is housed in cylinder 32, and drive mechanism 34 for driving screw 33. Screw 33 is both rotated and driven in the X-direction (rearward and forward movement) by drive mechanism 34. Heaters 39 that heat and melt the metal material are wrapped around the circumference of cylinder 32. As shown in Fig. 2, heater 39 is covered with insulating material 40.

Cylinder 32 is generally divided from rear to front into supply section P1, compression section P2, and measurement section P3. Hopper 36 is provided in supply section P1 and is supplied with pellet-shaped metal material. The metal material is conveyed to compression section P2 while receiving residual heat from heater 39. The metal material is compressed, heated, and kneaded in compression section P2 to a molten state, and then transferred to measurement section P3. Measurement section P3 measures the amount of molten metal to be injected in one injection cycle (shot). Screw 33 has screw head 35 at its front end in the +X-direction. Injection nozzle 37 that supplies molten metal to cavity M3 is attached to the end of cylinder 32.

### Thermocouple 4 and Thermocouple Mounting Structure 5

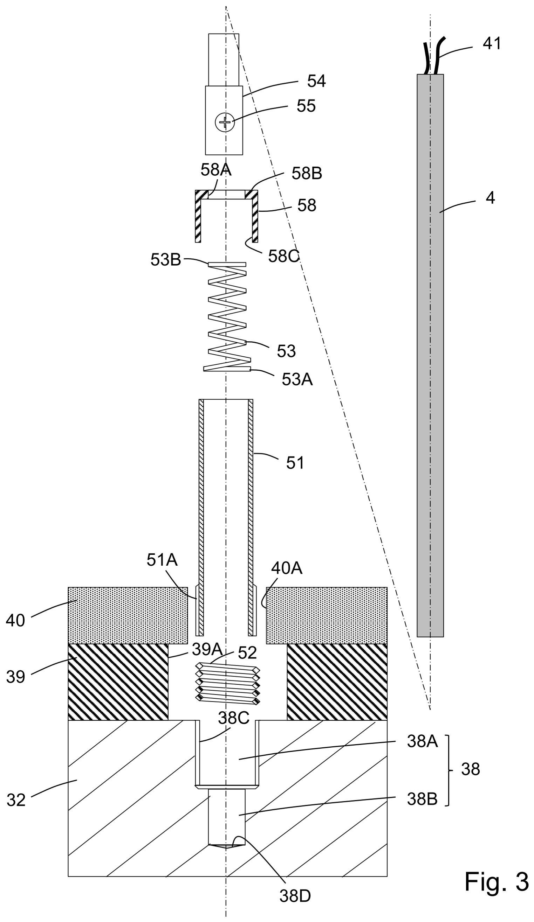

Fig. 2 is an enlarged view of area A in Fig. 1 showing thermocouple 4 and thermocouple mounting structure 5, and Fig. 3 is an exploded view of thermocouple 4 and thermocouple mounting structure 5. A plurality of thermocouples 4 are mounted on cylinder 32 for measuring and controlling the cylinder temperature. As shown in Fig. 1, thermocouples 4 are provided for each heater control area (not shown) of cylinder 32. One thermocouple 4 may control one heater 39, or one thermocouple 4 may control multiple (e.g., two or three) heaters 39. In addition to thermocouple 4 for control, spare thermocouples may be attached to detect abnormal heating or the like. Thermocouples 4 are attached to cylinder 32 by thermocouple mounting structures 5.

Each thermocouple mounting structure 5 comprises thermocouple retainer 51 that holds thermocouples 4, threaded hole 38 (see Fig. 3) that is provided in cylinder 32 for thermocouple retainer 51, and intermediate mounting member 58. Threaded hole 38 includes threaded hole portion 38A that extends from the outer surface of cylinder 32 to the interior of cylinder 32, and small-diameter portion 38B that is coaxial with threaded hole portion 38A and that is smaller in diameter than threaded hole portion 38A. Female threads 38C are provided on the inner surface of threaded hole portion 38A.

As shown in Figs. 2 and 3, thermocouple retainer 51 is a hollow cylindrical member and is provided with male threads 51A at its tip. Thermocouple retainer 51 is attached to cylinder 32 via intermediate mounting member 52. Thermocouple retainer 51 extends outside of cylinder 32 through through-holes 39A and 40A that are provided in heater 39 and insulating material 40, respectively. Thermocouple 4 is inserted into the hollow portion of thermocouple retainer 51 and further inserted into small-diameter portion 38B of threaded hole 38 such that one end of thermocouple 4 is in contact with bottom portion 38D of threaded hole 38. Thermocouple 4 extends outward from thermocouple retainer 51, and lead wires 41 extend from the end of thermocouple 4 on the outer side.

Cap member 58 is provided on the outer end of thermocouple retainer 51. Cap member 58 is fixed onto thermocouple retainer 51 by threading (not shown) that is provided on the inner surface of cap member 58. Cap member 58 is a cylindrical member, one end of which having a bottom portion 58B that has opening 58A through which thermocouple 4 passes, and the other end thereof being open-end 53C.

Coil spring 53 wraps around thermocouple 4. One end 53A of coil spring 53 has a larger diameter than the other parts. Coil spring 53 is inserted into opening 58A from the open-end-53C side of cap member 58, and lager end 53A is held by the inner surface of bottom portion 58B of cap member 58. Cylindrical spring-adjustment fitting 54 is provided around thermocouple 4, and coil spring 53 is inserted between thermocouple 4 and spring-adjustment fitting 54. The other end 53B of the spring is secured to thermocouple 4 via spring-adjustment fitting 54 by screw 55.

By applying a tensile force to coil spring 53, one end 53A of coil spring 53 is pressed against the inner surface of bottom portion 58B of cap member 58. Due to this tensile force, coil spring 53 applies a downward force (elastic restoring force) to thermocouple 4 at the part at which thermocouple 4 is fixed to spring-adjustment fitting 54. This downward force causes the tip of thermocouple 4 to reliably contact bottom portion 38D of threaded hole 38 and thus enables accurate measurement of the cylinder temperature. The elastic restoring force of coil spring 53 can be adjusted by the position of spring-adjustment fitting 54.

### Intermediate Mounting Member 52

In general, when a structure in which a screw engages with a threaded hole is exposed to high temperature for a long period of time, the screw is likely to seize. In particular, if the screw and threaded hole in such a structure are made of the same type of material and a large load is applied to the contact surfaces between the screw and the structure, there is a high possibility that adhesion and seizure will occur. In the case of metal injection molding machine 1 of the present embodiment, the temperature of the cylinder reaches 600-700°C. Thermocouple 4 and thermocouple retainer 51 may be removed from cylinder 32 for such purposes as maintenance of cylinder 32. Seizure of male threads 51A of thermocouple retainer 51 and the resulting inability to remove thermocouple retainer 51 not only hinders maintenance but may also necessitate installation of a new thermocouples 4 elsewhere on cylinder 32.

Therefore, in thermocouple mounting structure 5 of the present embodiment, intermediate mounting member 52 of a different material from thermocouple retainer 51 is interposed between threaded hole 38 in cylinder 32 and thermocouple retainer 51. A "different material" here means that the element with the highest component ratio of intermediate mounting member 52 is different from the element with the highest component ratio of thermocouple retainer 51.

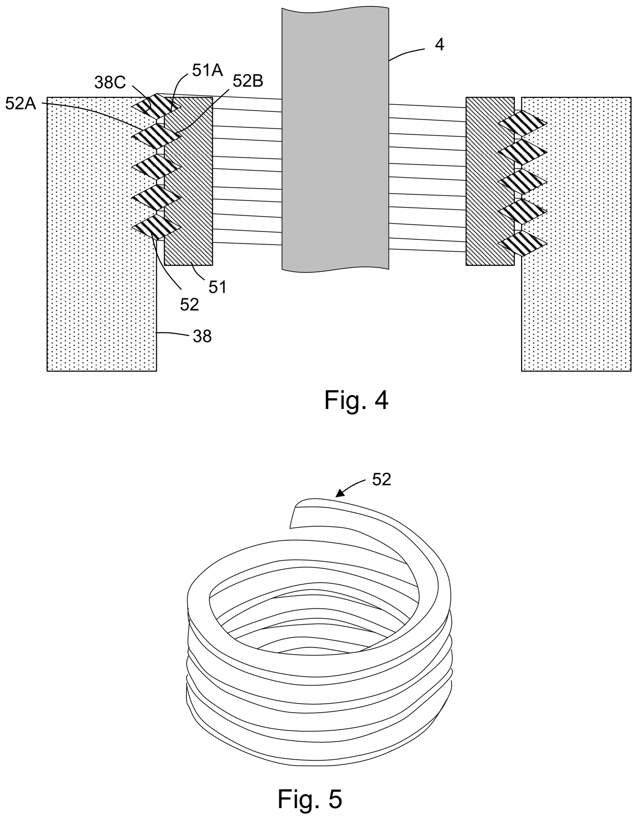

Fig. 4 is an enlarged view of area B in Fig. 2 and shows intermediate mounting member 52, thermocouple retainer 51, and cylinder 32, and Fig. 5 is a diagram of intermediate mounting member 52. Intermediate mounting member 52 is a wire having a rhombus-shaped cross section wound in a coil shape. The adjacent layers of this wire are in close contact with each other or have a small gap therebetween, and intermediate mounting member 52 as a whole is formed in a generally hollow cylindrical or coil shape.

The outer surface of intermediate mounting member 52 includes external threads 52A that engage with threaded hole portion 38A of threaded hole 38 of cylinder 32, and the inner surface of intermediate mounting member 52 includes internal threads 52B that engage with male threads 51A of thermocouple retainer 51. Intermediate mounting member 52 is screwed into threaded hole 38 of cylinder 32 using a specialized tool, and thermocouple retainer 51 is then screwed into internal threads 52B of intermediate mounting member 52.

Intermediate mounting member 52 and thermocouple retainer 51 are both made of metal but their materials are different from each other. In the present embodiment, thermocouple retainer 51 is made of a common steel material, and intermediate mounting member 52 is made of a nickel alloy. In other words, the metal element with the highest component ratio in intermediate mounting member 52 is nickel, and the metal element with the highest component ratio in thermocouple retainer 51 is iron. Nickel alloys are preferred because they have excellent high-temperature durability.

### Effect of the Present Embodiment

The effects of the present embodiment will next be described. Seizure of male threads 51A of thermocouple retainer 51 can be reduced by, for example, making thermocouple retainer 51 from a nickel alloy. However, nickel alloy is expensive. The present embodiment requires the installation of only intermediate mounting member 52, and intermediate mounting member 52 can be a commercially available product, whereby additional cost can be limited. An example of a commercially available product is the Recoil (registered trademark) "Inconel X-750" from Ikeda Metal Industrial Co., Ltd. This commercial product is used as a component for reinforcing or repairing female threads, but in the present embodiment, this product is used to suppress screw seizure.

Cylinder 32 is made of steel and intermediate mounting member 52 and cylinder 32 are therefore made of different materials from each other. Seizure is consequently unlikely to occur even between external threads 52A of intermediate mounting member 52 and threaded hole 38 of cylinder 32. Even if seizure should occur between internal threads 52B of intermediate mounting member 52 and male threads 51A of thermocouple retainer 51 such that thermocouple retainer 51 is unable to rotate with respect to cylinder 32, the intermediate mounting member may be able to rotate with respect to threaded hole 38 of cylinder 32.

Therefore, even if thermocouple retainer 51 cannot be removed from intermediate mounting member 52 by itself, the possibility remains that thermocouple retainer 51 can be removed together with intermediate mounting member 52. As a result, means for removing thermocouple retainer 51 from cylinder 32 in the present embodiment become redundant, and this redundancy improves reliability.

### Modification 1

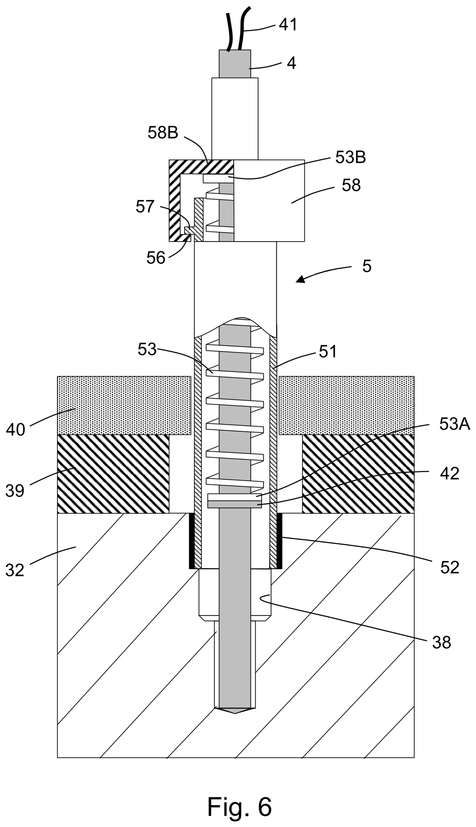

Fig. 6 presents a view similar to Fig. 2 and shows Modification 1 of the present embodiment. In the present modification, the method of fixing thermocouple 4 to thermocouple retainer 51 is different. Coil spring 53 is provided on the cylinder-32 side from cap member 58. Receiving portion 42 of coil spring 53 is provided on thermocouple 4, and one end of coil spring 53 is held by receiving portion 42 and the other end is held by bottom portion 58B of cap member 58. Cap member 58 includes claw part 56 that projects inwardly in the radial direction, and thermocouple retainer 51 includes hook 57 that projects outwardly in the radial direction.

When coil spring 53 is attached between cap member 58 and receiving portion 42 and cap member 58 is pushed toward cylinder 32, coil spring 53 is compressed and thermocouple 4 is pushed into threaded hole 38. When cap member 58 is rotated, claw part 56 is caught by hook 57 (bayonet locking system). In the present modification, intermediate mounting member 52 is provided similar to the above embodiment, and thermocouple retainer 51 is secured to intermediate mounting member 52 in the same manner.

### Modification 2

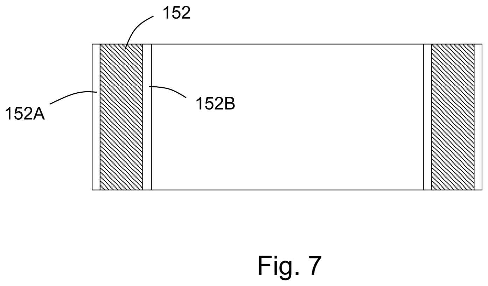

Fig. 7 is a cross-sectional view of intermediate mounting member 152 according to Modification 2 of the present embodiment. Intermediate mounting member 152 is a hollow cylindrical member and includes external threads 152A on its outer surface that engage with threaded hole portion 38A of threaded hole 38 of cylinder 32, and internal threads 152B on its inner surface that engage with male threads 51A of thermocouple retainer 51. Unlike the above embodiment, intermediate mounting member 152 is not made of a wound wire, but rather, is made of a hollow cylindrical member with threads on both inner and outer sides. Intermediate mounting member 152 is formed of, for example, a nickel alloy. Intermediate mounting member 152 of this form also has the same effect as intermediate mounting member 52.

Although the present embodiment relates to a thermocouple mounting structure for a metal injection molding machine, the present invention is not limited to this application. For example, the present invention can be applied to resin injection molding machines. The present invention can also be applied to resin and metal extruders. The present invention can also be applied to mechanical equipment having a cylinder for heating and melting material, a thermocouple mounting structure attached to the cylinder, and a thermocouple attached to the mounting structure.

The present invention can also be applied to a conversion of the mechanical equipment described above. If thermocouple retainer 51 is screwed directly into threaded hole 38 of cylinder 32, the possibility of seizure of thermocouple retainer 51 can be reduced by applying thermocouple mounting structure 5 of the present invention in the procedure next described.

First, remove thermocouple 4 and thermocouple retainer 51 from cylinder 32. Next, install intermediate mounting member 52 (or 152) described above in threaded hole 38 in cylinder 32. Next, install intermediate mounting member 51 in cylinder 32 by engaging external threads 52A with threaded hole 38 in cylinder 32. Finally, install thermocouple retainer 51, coil spring 53, cap member 58, and thermocouple 4. At this time, threaded hole 38 in cylinder 32 has been substantially reduced in correspondence with the dimensions of intermediate mounting member 52 that is newly provided, and thermocouple retainer 51 and thermocouple 4 having smaller diameters than those originally provided may be preferable.

### Reference Number List

- 1: injection molding machine
- 4: thermocouple
- 5: thermocouple mounting structure
- 32: cylinder
- 38: threaded hole
- 51: thermocouple retainer
- 52, 152: intermediate mounting member
- 52A, 152A: external threads
- 52B, 152B: internal threads

## Claims

1. A thermocouple mounting structure attached to a cylinder for heating and melting materials, comprising:
an intermediate mounting member having an outer surface with external threads that engage with a threaded hole in said cylinder and an inner surface with internal threads, and
a thermocouple retainer that is screwed into said internal threads of said intermediate mounting member and that holds a thermocouple, wherein
said intermediate mounting member is made of a different material from said thermocouple retainer.

2. The thermocouple mounting structure according to claim 1, wherein said thermocouple retainer and said intermediate mounting member are made of metal, and wherein a metal element with the highest component ratio of said intermediate mounting member is different from a metal element with the highest component ratio of said thermocouple retainer.

3. The thermocouple mounting structure according to claim 2, wherein the metal element with the highest component ratio of said intermediate mounting member is nickel and the metal element with the highest component ratio of said cylinder is iron.

4. The thermocouple mounting structure according to claim 1, wherein said intermediate mounting member is made of a different material from said cylinder.

5. The thermocouple mounting structure according to any one of claims 1 to 4, wherein said intermediate mounting member is a member in which a wire having a rhombus-shaped cross section is wound in a coil shape.

6. Mechanical equipment, comprising:
the thermocouple mounting structure according to any one of claims 1 to 5;
said cylinder; and
a thermocouple that is attached to said thermocouple mounting structure.

7. The mechanical equipment according to claim 6, wherein said mechanical equipment is an injection molding machine.

8. A method for attaching a thermocouple mounting structure to a cylinder for heating and melting materials, comprising steps of:
(A) attaching an intermediate mounting member that includes external threads on the outer surface and internal threads on the inner surface to said cylinder by engaging said external threads with a threaded hole in said cylinder; and
(B) screwing a thermocouple retainer, which holds a thermocouple, into said internal threads of said intermediate mounting member,
wherein said intermediate mounting member is made of a different material from said thermocouple retainer.
